# EUROPÄISCHE PATENTSCHRIFT

(11) **EP 1 393 955 B1**
(45) Veröffentlichungstag und Bekanntmachung des Hinweises auf die Patenterteilung: **28.10.2009**
(21) Anmeldenummer: 03005510.7
(22) Anmeldetag: 11.03.2003
(51) Int. Cl.: B60K 15/05, B60K 15/04

(54) **Füllstutzen mit einem automatisch schliessenden Verschluss für stationäre oder in Fahrzeugen eingebaute Flüssigkeitstanks**
Filler nozzle with automatically closing cover for stationary or vehicle mounted fluid tanks
Embout de remplissage à clapet de fermeture automatique pour réservoir de fluide stationnaire ou intégré dans une voiture

(30) Priorität: 11.03.2002 DE 20203876 U
(43) Veröffentlichungstag der Anmeldung: 03.03.2004
(73) Patentinhaber: Bruno, Bartelt, Metallbearbeitung, Inhaber: Romanowicz, Axel, 12057 Berlin (DE)
(72) Erfinder: Romanowicz, Axel, D-15738 Zeuthen (DE)
(74) Vertreter: Burghardt, Dieter

(56) Entgegenhaltungen:
- EP-A- 0 980 780
- US-A- 3 334 779
- US-A- 3 478 922
- US-A- 4 598 741
- US-A- 5 195 566
- US-A- 5 730 194

## Beschreibung

Die Erfindung betrifft einen Füllstutzen mit einem automatisch schließenden Verschluß für stationär oder mobil angeordnete Flüssigkeitstanks, der es ermöglicht, eine Betankung sowohl in traditioneller Weise mit einer von Hand betätigten Zapfpistole als auch mit einer vollautomatisch arbeitenden Treibstoffoder Heizölzapfeinrichtung vorzunehmen.

Stationäre oder mobile, d.h. in Fahrzeuge eingebauten Treibstoffbehälter weisen einen Füllstutzen auf, der in der Regel durch einen aufschraubbaren Tankdeckel gegenüber der Umgebung verschließbar ist. Vor einer Betankung muß dieser Tankdeckel manuell entfernt werden und nach Abschluß der Betankung wieder auf einen Füllstutzen aufgebracht und dort verschlossen werden. Bei einer automatisch arbeitenden Betankung ist die Art des Tankverschlusses nicht akzeptabel, weil die automatische Betankung sich nur auf den Füllvorgang beschränkt. Zur vollautomatischen Betankung, wobei die manuelle Entfernung des Tankdeckels nicht mehr erforderlich ist, ist ein aus einer federbelasteten Klappe bestehender Abschlußdeckel, der den Einfüllstutzen eines Treibstofftanks verschließt, bekannt geworden. Bei Betätigung dieser Klappe durch eine Fülleinrichtung wird diese aufgestoßen und der Füllvorgang beginnt. Das Betanken eines Treibstoffbehälters, der mit einem solchen klappenartigen Tankverschluß ausgerüstet ist, hat den Nachteil, daß die Betankung nur dann möglich ist, wenn die Fülleinrichtung in den Füllstutzen des Treibstoffbehälters sicher eingeführt worden ist. Zwischen Fahrzeug und Betankungsanlage muß eine sehr genaue ositionsbestimmung erfolgen können. Der Aufwand hierfür ist sehr groß und in der raxis nicht realisierbar. Außerdem entsteht während des Füllens des Treibstoffbehälters im Füllstutzen ein Staudruck des Treibstoffes, der von der Zuströmgeschwindigkeit abhängig ist. Dabei entsteht ein Rückstrom in Form eines Kraftstoffnebels. Letztlich tritt dieser Kraftstoffnebel aus dem geöffneten Füllstutzen aus und belastet die Umwelt.

Nach der E 0 980 780 A2 ist eine Verschlußanordnung für einen Einfüllstutzen eines Behälters, insbesondere eines Kraftstoffbehälters eines Kraftfahrzeuges bekannt, die eine ohne zusätzliche Handbetätigung selbsttätig durch Einführen einer Zapfpistole öffnende Veraschlußanordnung für einen Kraftstofftank eines Kraftfahrzeuges enthält.

Ziel der Erfindung ist es, ein sicheres Betanken eines stationären oder mobilen, vorwiegend in Fahrzeugen eingebauten Treibstoffvorratsbehälters und von Heizölbehältern durch vollautomatisch arbeitende Betankungsanlagen ohne Umweltbelastung durch rückströmenden Kraftstoff zu ermöglichen, wobei kein manueller Handlungsbedarf während des Tankvorganges erforderlich ist.

Der Erfindung liegt die Aufgabe zugrunde, für stationäre und mobile, vorwiegend als Treibstoffvorratsbehälter ausgebildete Flüssigkeitstanks einen verschließbaren Füllstutzen, an dem ein Andocken an eine vollautomatische Treibstoff- oder Heiz-ölbetankungseinrichtung mit einer anschließenden Betankung des internen Treibstoff- oder Heizölvorratsbehälter möglich ist, wobei ein selbständiges Öffnen und Verschließen des Füllstutzens, eine zwangsweise Zentrierung und eine Selbsthaltung der Flüssigkeitszuführungseinrichtung der Füllanlage in dem Füllstutzen des als Treibstoff- oder Heizölvorratsbehälters ausgebildeten Flüssigkeitstank nach dem Andocken während des Betankens erfolgt, zu entwickeln, die eine Einrichtung zur Verhinderung eines Austrittes von Flüssigkeiten oder eines Flüssigkeitsgasnebels durch Rückstau während des Betankens aufweist.

Diese Aufgabe wurde durch die im Anspruch 1 offenbarten technischen Mittel gelöst.

Die Erfindung soll nachfolgend an einem Ausführungsbeispiel näher erläutert werden. In der zugehörigen Zeichnung zeigen:

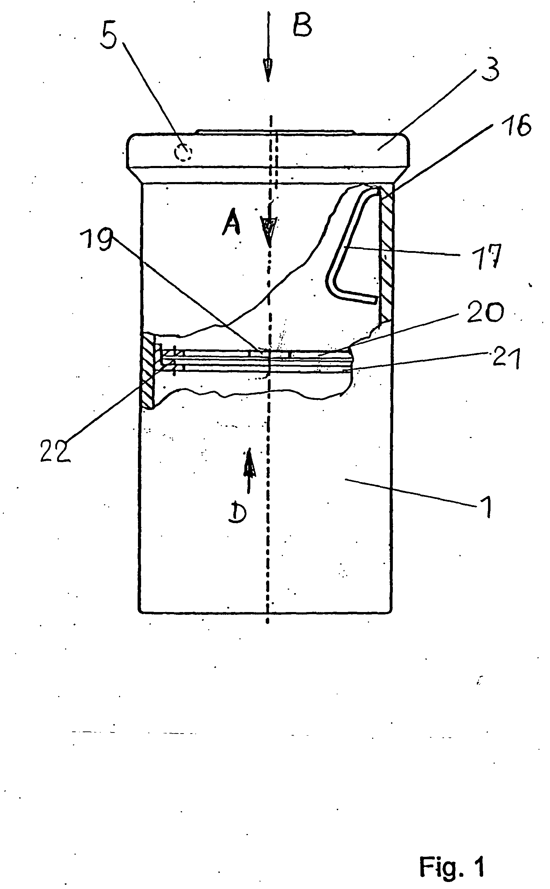

- Fig. 1: einen erfindungsgemäß gestalteten Füllstutzen in einer Ansicht mit Verschluß, Zentrierrampe und Schwallschutzeinrichtung,

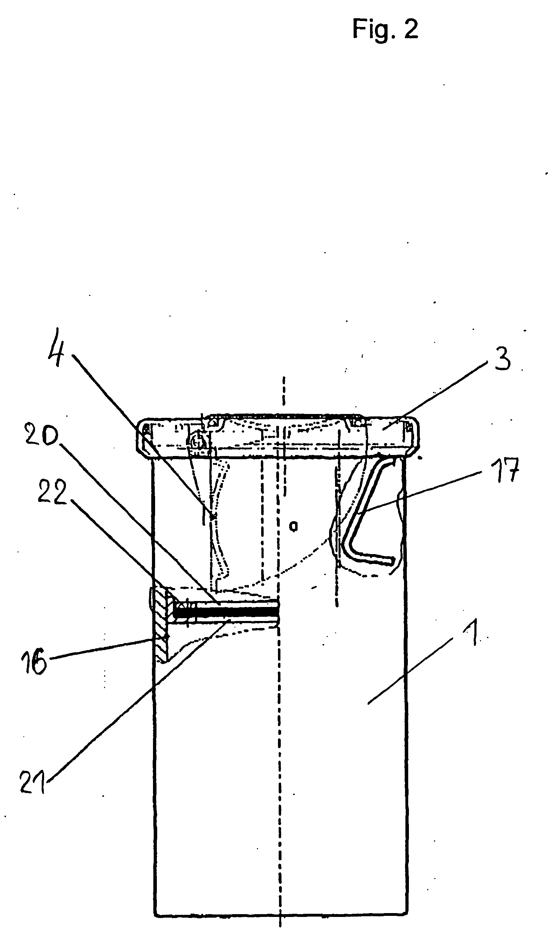

- Fig. 2: einen erfindungsgemäß gestalteten Füllstutzen nach Fig. 1 mit einer geöffneter Andichtklappe in verdeckter Anordnung dargestellt,

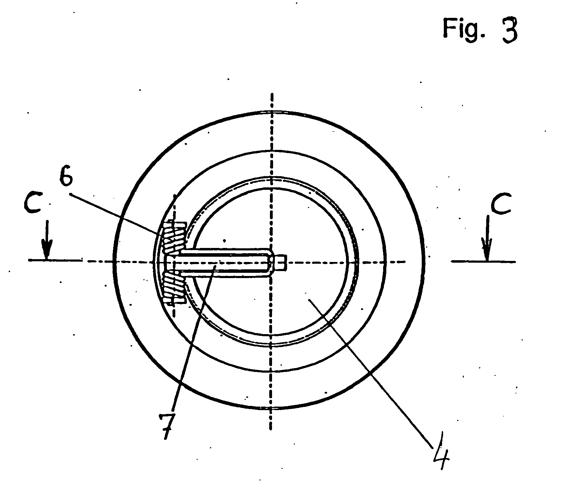

- Fig. 3: einen mit dem Füllstutzen fest verbundenen Verschluß, aus Richtung B vom Füllstutzen aus gesehen,

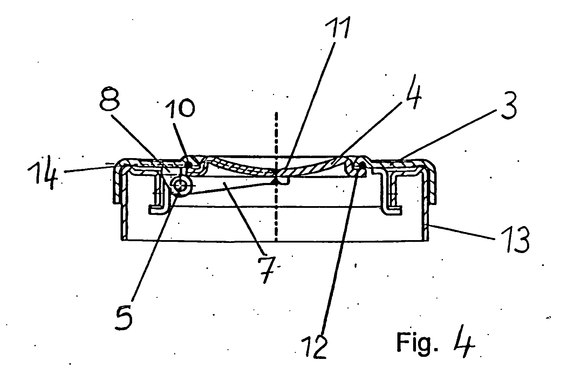

- Fig. 4: den Verschluß nach Fig. 3 im Schnitt C - C

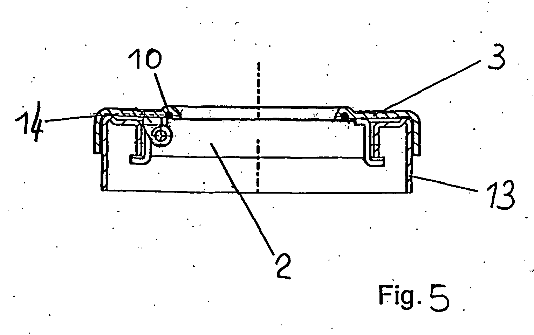

- Fig. 5: den Verschluß nach Fig. 3 im Schnitt C - C ohne Abdichtklappe

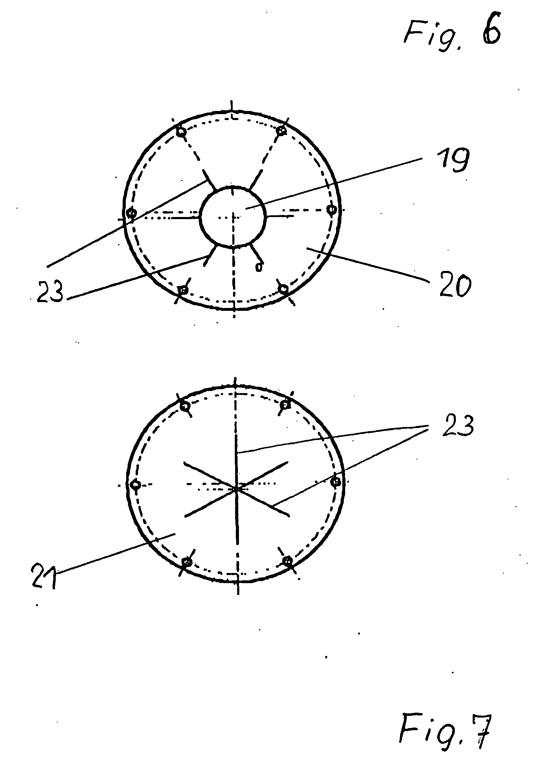

- Fig. 6: die Schwallschutzeinrichtung in einer Ansicht aus Richtung A nach Fig. 1,
- Fig. 7: die Schwallschutzeinrichtung in einer Ansicht aus Richtung D nach Fig. 1.

Ein Füllstutzen 1 ist einseitig mit einem nicht dargestellten, als Treibstoffbehälter ausgebildeten Flüssigkeitstank verbunden. An einem offenen Füllstutzenende trägt der Füllstutzen 1 eine Verschlußeinheit, die aus einem eine Durchtrittsöffnung 2 enthaltenden Verschlußgehäuse 3 und einer diese Durchtrittsöffnung 2 je nach ihrer Stellung entweder verschließenden oder freigebenden Abdichtklappe 4 besteht. Die Abdichtklappe 4 ist in dem Verschlußgehäuse 3 um eine Schwenkachse 5 schwenkbar und unter der Kraftwirkung einer Feder 6 in ihrer Schließstellung gehalten gelagert. Dazu ist ein Träger 7 vorgesehen, dessen eines Ende mit der Abdichtklappe 4 fest verbunden ist, und dessen anderes Ende auf der Schwenkachse 5 gelagert ist, die in einem in dem Verschlußgehäuse 3 angebrachten Trägerbock 8 gelagert ist. Außerdem ist auf der Schwenkachse 5 eine Feder 6 gelagert, deren eines Ende sich an dem Verschlußgehäuse 3 abstützt und deren anderes Ende sich an der Abdichtklappe 4 abstützt. Die Durchtrittsöffnung 2 ist in ihrem Randbereich als sickenförmige Versteifungswulst 9 ausgeformt, die der Aufnahme eines Dichtungsringes 10 dient, der zusammen mit der unter der Kraftwirkung der Feder 6 in ihrer Schließstellung gehaltenen Abdichtklappe 4 ein flüssigkeitsdichtes Verschließen der Durchtrittsöffnung 2 sichert. Die Abdichtklappe 4 weist einen konkav nach unten gewölbt ausgebildeten Mittelbereich 11 und einen flanschartig geformten, in Schließstellung der Abdichtklappe 4 in die Durchtrittsöffnung 2 hineinragenden Randbereich 12 auf, der den Mittelbereich 11 der Abdichtklappe 4 umrahmt. Der flanschförmige Randbereich 12 der Abdichtklappe 4 liegt in deren Schließstellung an dem in der Versteifungswulst 9 angebrachten Dichtungsring 10 an. Das Verschlußgehäuse 2 ist nach einer Ausführungsform mit einem DIN-Bajonett-Verschluß (nicht dargestellt) ausgestattet, der mit einer an einem Füllstutzen 1 eines Kraftstoffbehälters (nicht dargestellt) vorgesehenen DIN-Bajonett-Fassung 13 verriegelbar ist. Die Abdichtung des Füllstutzens 1 und der DIN-Bajonett-Fassung 13 erfolgt mittels einer Flachdichtung 14, an deren Stelle aber auch ein 0-Ring eingesetzt werden kann.

Zum Öffnen der Abdichtklappe 4 wird diese durch Aufsetzen beispielsweise einer Kraftstoffzapfpistole (nicht dargestellt) auf ihren konkav gewölbten Mittelbereich 11 unter Überwindung der Kraftwirkung der Feder 6 nach unten gedrückt bzw. geschwenkt, wodurch die Durchtrittsöffnung 2 freigegeben wird. Die konkave Wölbung des Mittelbereichs 11 der Abdichtklappe 4 bewirkt eine Zentrierung der auf diese aufgesetzten Kraftstoffzapfpistole (nicht dargestellt) während diese das Schwenken der Abdichtklappe 4 in die Stellung hervorruft, in der die Durchtrittsöffnung 2 freigegeben ist und Kraftstoff durch die Durchtrittsöffnung 2 hindurchfließen, d. h. in den Kraftstoffbehälter eingefüllt werden kann.

Nach einer weiteren Ausgestaltung der Verschlußeinheit ist diese so ausgebildet, daß das Verschlußgehäuse 3 mit dem Füllstutzen 1 fest verbunden ist. Ein mit dem Verschlußgehäuse 3 verbundenes flanschförmig gestaltetes Teil liegt an einer Innenfläche 16 des Füllstutzens 1 an und ist mit diesem starr, z. B. durch Punktschweißung verbunden. An Stelle der DIN-Bajonett-Fassung tritt dann eine feste Verbindung der Verschlußeinheit mit dem Füllstutzen 1.

Bei dem Öffnen der durch Kraftwirkung der Feder 6 geschlossen gehaltenen Abdichtklappe 4 taucht die Kraftstoffzapfpistole (nicht dargestellt) in die Durchtrittsöffnung 2 ca. 80 bis 100 mm tief ein. Dabei drückt die Abdichtklappe 4 das Einfüllrohr dieser Kraftstoffzapfpistole gegen den Bereich der Durchtrittsöffnung 2, der dem Bereich gegenüber liegt, an dem sich die Schwenklagerung 5, 7, 8 der Abdichtklappe 4 befindet, wodurch die Halterungsrasten der nicht dargestellten Kraftstoffzapfpistole am Rand der Durchtrittsöffnung 2 einrasten und das Öffnen des Kraftstoffzapfventils ausgelöst wird.

Nach dem Öffnen der Abdichtklappe 4 trifft die Kraftstoffzapfpistole auf die Mitte der mit der Innenfläche 16 des Füllstutzens 1 verbundenen Zentrierrampe 17 auf, die innerhalb des Füllstutzens gegenüber dem Trägerbock 8 der Schwenkachse 5 um 180 ° versetzt angeordnet ist. Hierdurch wird die Kraftstoffzapfpistole auf die Mitte des Füllstutzens 1 orientiert und eine nachgeordnete, mit dem Füllstutzen 1 verbundene Schwallschutzeinrichtung 18 wird wirksam, indem die Kraftstoffzapfpistole durch diese mittig hindurchgeführt wird.

Diese Schwallschutzeinrichtung 18 besteht aus zwei zentrisch zueinander und mit einem geringen Abstand aufeinander liegend angeordneten kreisförmig ausgebildeten Scheiben, einer mit einer Durchstoßöffnung 19 versehenen Durchstoßscheibe 20 und einer dahinterliegenden Stauscheibe 21. Beide Scheiben 20, 21 sind in einer mit der Innenfläche 16 des Füllstutzens 1 fest verbundenen Klemmverbindung 22 gehaltert. Sowohl die Durchstoßscheibe 20 als auch die Stauscheibe 21 weisen radial verlaufende Schlitze 23 mit einer definierten Länge auf. Die Durchstoßscheibe 20 und die Stauscheibe 21 sind so zu einander angeordnet, dass die Schlitze 23 um 30 ° zu einander versetzt angeordnet sind. Hierdurch wird beim Durchstoßen der Kraftstoffzapfpistole während des Verfüllens ein kraftstoffrückfluß verhindert.

Beim Herausnehmen der Kraftstoffzapfpistole aus der Durchtrittsöffnung 2 muß der auf die Abdichtklappe 4 wirkenden Kraft der Feder 6 entgegengewirkt werden, um die Halterungsrasten aus ihrer eingerasteten Stellung ohne Randberührung der Durchtrittsöffnung 2 herausnehmen zu können. In der Praxis ist aber mit einer derart sachgerechten Bedienung kaum zu rechnen. Deshalb ist der hiervon betroffene Randbereich der Durchtrittsöffnung so ausgeführt, dass er einer durch die über diesen "ratschenden" Halterungsrasten hervorgerufenen besonderen mechanischen Beanspruchung standhält.

Der erfindungsgemäße Verschluß für Tankdeckel von Kraftfahrzeugtanks und von Heizölbehältern ist für eine Betankung mittels vollautomatisch arbeitender Betankungsanlagen geeignet und vorgesehen, läßt aber gleichzeitig auch eine von Hand vorzunehmende Betankung mittels der üblichen Zapfpistolen zu. Letzteres kann sowohl bei auf den zu befüllenden Tank- oder Behälter-Einfüllstutzen aufgesetztem und verriegeltem Verschluß erfolgen, indem durch Krafteinwirkung auf die dabei ihre Schwenkbewegung ausführende Abdichtklappe mittels der Kraftstoff- oder Heizöl-Zapfpistole die Durchtrittsöffnung "durchstoßen", d. h. geöffnet wird oder zunächst der Verschluß von dem Tank oder Behälter abgenommen wird und danach der Betankungsvorgang beliebig eingeleitet werden kann. - Außerdem weist der erfindungsgemäße Verschluß die Vorteile gegenüber den bereits bekannten Tankverschlüssen auf, dass er aus Blech und dadurch kostengünstig herstellbar ist, eine flache und kompakte Bauweise ermöglicht sowie an DIN-Standards hinsichtlich seiner Anschlußmöglichkeiten angepaßt ist.

Der erfindungsgemäß ausgebildete Füllstutzen 1 mit der Verschlußeinheit und mit der nachgeordneten Zentrierrampe 17 und dem Schwallschutz 18 ist nicht nur für mobile und stationäre Kraftstoff- und Heizölbehälter sondern auch für Vorratsbehälter, die mit zu bevorratenden anderen Flüssigkeiten betankt werden sollen und sowohl im Handbetrieb wie auch mittels automatisch arbeitender Betankungsanlagen gefüllt werden müssen, vorteilhaft einsetzbar.

### Aufstellung der verwendeten Bezugszeichen

- 1: Füllstutzen
- 2: Durchtrittsöffnung
- 3: Verschlußgehäuse
- 4: Abdichtklappe
- 5: Schwenkachse
- 6: Feder
- 7: Träger
- 8: Trägerbock
- 9: Versteifungswulst
- 10: Dichtungsring
- 11: Mittelbereich
- 12: Randbereich
- 13: DIN-Bajonett-Fassung
- 14: Flachdichtung
- 15: Innenwandung
- 16: Innenfläche
- 17: Zentrierrampe
- 18: Schwallschutzeinrichtung
- 19: Durchstoßöffnung
- 20: Durchstoßscheibe
- 21: Stauscheibe
- 22: Klemmverbindung
- 23: Schlitz

### Aufstellung der verwendeten Bezugszeichen

- 1: Füllstutzen
- 2: Durchtrittsöffnung
- 3: Verschlußgehäuse
- 4: Abdichtklappe
- 5: Schwenkachse
- 6: Feder
- 7: Träger
- 8: Trägerbock
- 9: Versteifungswulst
- 10: Dichtungsring
- 11: Mittelbereich
- 12: Randbereich
- 13: DIN-Bajonett-Fassung
- 14: Flachdichtung
- 15: Innenwandung
- 16: Innenfläche
- 17: Zentrierrampe
- 18: Schwallschutzeinrichtung
- 19: Durchstoßöffnung
- 20: Durchstoßscheibe
- 21: Stauscheibe
- 22: Klemmverbindung
- 23: Schlitz

## Patentansprüche

1. Füllstutzen mit einem sich automatisch schließenden Verschluß für stationär oder mobil angeordnete Flüssigkeitstanks, die sowohl für vollautomatisch auszuführende Betankung wie auch für von Hand vorzunehmende Betankung vorgesehen sind, wobei der mit dem Flüssigkeitstank fest verbundene Füllstutzen am offenen Füllstutzenende eine automatisch das offene Füllstutzenende flüssigkeitsdicht verschließende und nach innen in den Füllstutzen hinein sich öffnende, aus Verschlußgehäuse, Durchtrittsöffnung und aus einer schwenkbar im Verschlußgehäuse gelagerten und unter Kraftwirkung einer Feder stehenden Abdichtklappe bestehende Verschlußeinheit aufweist, und innerhalb des Füllstutzens der Verschlußeinheit nachgeordnet, eine mit einer Innenfläche des Füllstutzens verbundene, Zentrierrampe zum Führen einer externen Flüssigkeitszuführungseinrichtung und eine Schwallschutzeinrichtung vorgesehen sind, ***dadurch gekennzeichnet*, daß** die der Verschlußeinheit (2, 3, 4) nachgeordnete Schwallschutzeinrichtung (18) aus zwei zentrisch zueinander und aufeinander liegend angeordneten kreisförmig ausgebildeten Scheiben (20, 21) aus einem elastischen Material besteht, wobei die obere, der Verschlußeinheit (2, 3, 4,) zugewandte Scheibe als Durchstoßscheibe (20) und dahinterliegende Scheibe als Stauscheibe (21) ausgebildet ist und beide Scheiben (20, 21) in einer Klemmverbindung (22) gehaltert sind.

2. Füllstutzen nach Anspruch 1, ***dadurch gekennzeichnet,* daß** Durchstoßscheibe (20) und dahinterliegende Stauscheibe (21) sternförmig radial verlaufende Schlitze (23) aufweisen, die vom geometrischen Ort des jeweiligen Durchmessers der Durchstoßscheibe (20) und Stauscheibe (21) ausgehen, wobei die vom geometrischen Ort ausgehende Schlitzlänge kleiner als 0,5 der Scheibendurchmesser ist und die Schlitze (23) eine Teilung von 60 ° aufweisen.

3. Füllstutzen nach Anspruch 1 und 2, ***dadurch gekennzeichnet,* daß** die Durchstoßscheibe (20) eine zentrisch angeordnete kreisflächenförmige Durchstoßöffnung (19) aufweist, wobei der Durchmesser dieser Durchstoßöffnung (19) dem der Flüssigkeitszuführungseinrichtung angepaßt ist und kleiner als der Durchmesser der Flüssigkeitszuführungseinrichtung ist.

4. Füllstutzen nach Anspruch 1 bis 3, ***dadurch gekennzeichnet,* daß** die sternförmig radial verlaufenden Schlitze (23) der Durchstoßscheibe (20) und die der Stauscheibe (21) um 30 ° versetzt zueinander angeordnet sind.

## Claims

1. A filler neck with an automatically shutting closure for liquid tanks arranged in a stationary or mobile manner, which are intended both for filling-up to be carried out fully automatically and for filling-up to be carried out manually, wherein the filler neck connected rigidly to the liquid tank comprises, at the open filler neck end, a closure unit which automatically closes the open filler neck end liquid-tight and opens inwards into the filler neck and comprises a closure housing, a pass-through opening and a sealing flap mounted in a swivelling manner in the closure housing and being under the dynamic effect of a spring, and there are provided, arranged downstream of the closure unit inside the filler neck, a centring ramp for guiding an external liquid supply device, said centring ramp being connected to an internal surface of the filler neck, and a splash protection device, **characterised in that** the splash protection device (18) arranged downstream of the closure unit (2, 3, 4) comprises two discs (20, 21) made from an elastic material which are shaped circular and arranged concentrically with respect to one another and one lying upon the other, wherein the upper disc facing the closure unit (2, 3, 4) is constituted as a push-through disc (20) and the disc lying behind the latter as a baffle disc (21) and both discs (20, 21) are held in a clamped connection (22).

2. The filler neck according to claim 1, **characterised in that** the push-through disc (20) and the baffle disc (21) lying behind the latter comprise slits (23) running radially in a star-shaped manner, which proceed from the geometrical position of the respective diameter of the push-through disc (20) and the baffle disc (31), wherein the slit length proceeding from the geometrical position is less than 0.5 of the disc diameter and the slits (23) have a spacing of 60°.

3. The filler neck according to claim 1 or 2, **characterised in that** the push-through disc (20) comprises a circular push-through opening (19) arranged concentrically, wherein the diameter of this push-through opening (19) is matched to that of the liquid supply device and is smaller than the diameter of the liquid supply device.

4. The filler neck according to claim 1 to 3, **characterised in that** the slits (23) of the push-through disc (20) running radially in a star-shaped manner and those of the baffle disc (21) are arranged offset by 30° with respect to one another.

## Revendications

1. Tuyau de remplissage comprenant un obturateur à fermeture automatique pour des citernes de liquide fixes ou mobiles prévues aussi bien pour faire le plein de manière totalement automatique ou manuellement, le tuyau de remplissage relié de manière fixe à la citerne de liquide présentant sur l'extrémité de tuyau de remplissage ouverte une unité d'obturateur fermant l'extrémité de tuyau de remplissage ouvert automatiquement et s'ouvrant vers l'intérieur dans le tuyau de remplissage, composée d'un boîtier d'obturateur, d'une ouverture traversante et d'un clapet étanche placé de manière à pouvoir pivoter dans le boîtier d'obturateur et sous la force d'un ressort, et placée à l'intérieur du tuyau de remplissage, une rampe de centrage reliée à une face intérieure du tuyau de remplissage pour diriger un dispositif d'introduction du liquide externe et un dispositif de protection contre les flots de liquide, **caractérisé en ce que** le dispositif de protection contre les flots de liquide (18) placé en aval de l'unité d'obturateur (2, 3, 4) est composé de deux disques (20, 21) placés de manière centrale l'un par rapport à l'autre et reposant l'un sur l'autre en matériau élastique, le disque supérieur tourné vers l'unité d'obturateur (2, 3, 4) est un disque de passage (20) et le disque placé derrière est un disque de stabilisation (21) et les deux disques sont maintenus par un raccord serré.

2. Tuyau de remplissage selon la revendication 1, **caractérisé en ce que** le disque de passage (20) et le disque de stabilisation (21) placé derrière présentent des fentes (23) radiales étoilées qui partent du point géométrique de chaque diamètre du disque de passage (20) et du disque de stabilisation (21), la longueur de fente partant du point géométrique est inférieure à 0,5 du diamètre de disque et les fentes (23) présentent un écartement de 60°.

3. Tuyau de remplissage selon la revendication 1 et 2, **caractérisé en ce que** le disque de passage (20) présente une ouverture de passage (19) à face circulaire placée de manière centrale, le diamètre de cette ouverture de passage (19) étant adapté au dispositif d'introduction du liquide et inférieur au diamètre du dispositif d'introduction du liquide.

4. Tuyau de remplissage selon les revendications 1 à 3, **caractérisé en ce que** les fentes (23) radiales étoilées du disque de passage (20) et celles du disque de stabilisation (21) sont décalées de 30° les unes par rapport aux autres.
